(19) Europäisches Patentamt
European Patent Office
Office européen des brevets

(11) **EP 3 715 728 B1**

(12) **EUROPEAN PATENT SPECIFICATION**

(45) Date of publication and mention of the grant of the patent:
**02.11.2022 Bulletin 2022/44**

(21) Application number: **19166130.5**

(22) Date of filing: **29.03.2019**

(51) International Patent Classification (IPC):
**F24D 17/00** (2022.01)   **F24D 17/02** (2006.01)

(52) Cooperative Patent Classification (CPC):
**F24D 17/02; F24D 17/0005; F24D 17/001;**
F24D 2200/12; F24D 2200/123; F24D 2200/20;
F24D 2220/08; F24D 2220/10; Y02B 10/70;
Y02B 30/18; Y02B 30/52

(54) **HEAT PUMP ASSISTED MULTISTAGE WASTE WATER HEAT RECOVERY DEVICE  WITH REDUCED HEAT PUMP SIZE**

VORRICHTUNG ZUR WÄRMEPUMPENUNTERSTÜTZTEN MEHRSTUFIGEN ABWASSERWÄRMERÜCKGEWINNUNG MIT REDUZIERTER WÄRMEPUMPENGRÖSSE

DISPOSITIF DE RÉCUPÉRATION DE CHALEUR D'EAUX USÉES À PLUSIEURS ÉTAGES ASSISTÉ PAR UNE POMPE À CHALEUR AVEC TAILLE RÉDUITE DE LA POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2020 Bulletin 2020/40**

(73) Proprietors:
• **Mitsubishi Electric R&D Centre Europe B.V. Livingston EH54 5DJ (GB)**
Designated Contracting States:
**GB**
• **Mitsubishi Electric Corporation Tokyo 100-8310 (JP)**
Designated Contracting States:
**AL AT BE BG CH CY CZ DE DK EE ES FI FR GR HR HU IE IS IT LI LT LU LV MC MK MT NL NO PL PT RO RS SE SI SK SM TR**

(72) Inventor: **Salvador, Michael Livingston, EH54 5DJ (GB)**

(74) Representative: **Pfenning, Meinig & Partner mbB Patent- und Rechtsanwälte Theresienhöhe 11a 80339 München (DE)**

(56) References cited:
**EP-A2- 2 345 851      WO-A1-2012/061891
WO-A1-2017/050623    DE-A1-102010 044 122
GB-A- 2 304 877**

**Description**

The invention relates to a waste water heat recovery device, in particular waste water heat recovery device, comprising at least one first waste water heat recovery unit configured to be connected to a waste water line and to a process water line, where the first waste water heat recovery unit comprises a heat exchanger arrangement to transfer heat from waste water in the waste water line to process water in the process water line; a second waste water heat recovery unit configured to be connected to the waste water line, downstream of the first waste water heat recovery unit, and to the process water line, downstream of the first waste water heat recovery unit, where the second waste water heat recovery unit comprises a heat pump arrangement to transfer heat from waste water in the waste water line to process water in the process water line.

Heating, ventilation, and air conditioning (HVAC) in buildings account for around 25 percent of global energy consumption, with domestic hot water (DHW) accounting for 20 percent of total energy consumption in the buildings. Under new and upcoming building regulations aimed at improving a building's thermal envelope and air tightness, DHW will account for around 50 percent of the energy consumption in new building stocks by 2030.

Several technologies already exist for producing DHW, for example, solar thermal systems or heat pumps. However, both of these have some disadvantages, such as lack of sufficient roof space to fit solar panels, and the electric energy consumed by heat pumps, as well as their need for a bore hole as the heat source and/or a spot or pitch upon which to install a corresponding outdoor unit.

One solution which can overcome said disadvantages is the recovery of energy from waste hot water (WHW) using waste water heat recovery systems or devices (WWHRS). Such systems or devices are usually based on heat transfer from WHW to cold (process) water circuits in order to preheat them, and they can be installed inside dwellings.

As an example, US 2 575 325 A discloses such a waste water heat recovery system with a heat exchanger connected to a waste hot water line and a heat pump connected to the heat exchanger.

WO 2017/050623 A1 describes a device for producing domestic hot water by heat recovery from waste water, comprising a waste water discharge circuit, a circuit for heating domestic cold water to produce domestic hot water, a first heat exchanger arranged on the waste water circuit configured to transfer heat from the waste water to the domestic cold water, resulting in preheated cold water, a heat pump comprising an evaporator and a condenser, configured to heat the preheated cold water to produce domestic hot water, the evaporator being arranged on the waste water circuit downstream from and in series with the first heat exchanger, the condenser being arranged on the heating circuit downstream from and in series with the first heat exchanger so as to heat preheated water from the first heat exchanger, the device comprising a priming circuit configured to supply domestic cold water to the evaporator of the heat pump, and the device not comprising storage of either domestic hot water or waste water.

WO 2012/061891 A1 provides a process and apparatus for the recovery of heat energy from wastewater. Wastewater from a domestic residence is introduced into a detention chamber which provides effective decoupling between the introduction of new wastewater and the demand for heat energy from its ultimate application. A heat exchange surface, in contact with the wastewater on the one side and the working fluid on the other, extracts heat from the detention chamber through thermal conduction and the working fluid is transferred, via a heat pump, to a second heat exchange surface. The second heat exchange surface, in contact with the working fluid on the one side and heat energy storage media on the other side, transfers heat energy to the storage media through conduction. Heat energy can then be extracted from the storage media for applications including heating of potable water or provision of building heating.

DE 10 2010 30 44 122 A1, EP 2345851 A2, and GB 2 304 877 A provide further processes and apparatuses for water heating.

The technical problem to be solved by the invention at hand may be considered to be how to improve the efficiency of a waste water heat recovery system or a waste water heat recovery device.

Said problem is solved by the subject-matter of the independent claims. Advantageous features and embodiments of the invention are apparent from the dependent claims, the description, and the figures.

One aspect relates to a waste water heat recovery device, comprising at least one first waste water heat recovery unit configured to be connected or connected to a waste water line and to a process water line, where the first waste water heat recovery unit comprises a heat exchanger arrangement to transfer heat from waste water in the waste water line to process water in the process water line, and a second waste water heat recovery unit configured to be connected or connected to the waste water line, downstream of the first waste water heat recovery unit, and to the process water line, downstream of the first waste water heat recovery unit, where the second waste water heat recovery unit comprises a heat pump arrangement to transfer heat from waste water in the waste water line to process water in the process water line. The respective arrangements are subunits of the corresponding waste water heat recovery units, where the heat exchanger arrangement comprises a heat exchanger and the heat pump arrangement comprises a heat pump.

The heat pump arrangement comprises a low-temperature heat buffer storage, a high-temperature heat buffer storage, and a heat pump. Therein, a heat storage is considered to be device with the purpose of storing heat with a defined capacity. The low-temperature heat buffer storage has, in a specified normal or intended use, a lower working temperature than the high-temperature heat buffer storage and is configured to extract heat from waste water in the waste water line and to store the extracted heat. So, the low-temperature heat buffer storage is configured to store a heat of lower temperature then the high-temperature heat buffer storage. The heat pump is configured to transfer the stored heat from the low-temperature heat buffer storage to the high-temperature heat buffer storage, and the high-temperature heat buffer storage is configured to store the heat transferred by the heat pump and to provide said heat to process water in the process water line.

This results in the advantage that, contrasting most waste water heat recovery systems using in-line devices to preheat cold water, the described waste water heat recovery device is not limited to recovering waste heat from waste heat water of showers as it does not require the flow of process water through the device when recovering waste heat. Furthermore, the use of heat buffer storage saves resources is makes it possible to use a heat pump of smaller dimensions than in the conventional system, as the use of the heat buffer storages allows to stretch the heat recovery over an extended period of time. Namely, both shower or bath have a high energy recovery potential that, by being available only a relatively short period of time, require a high capacity heat pump for a relatively short operation time, with the standard shower power rate being about 19 kW (only for several minutes) and standard bath power rate being about 76 kW (only for several minutes). In a standard waste water recovery system, this power needs to be recovered within only several minutes by the heat pump. As the heat is buffered in the device at hand, the heat pump may be downsized and is still able to recover the same amount of heat as a bigger heat pump in a conventional setup. So, the described waste water heat recovery device provides resource saving, flexible, and efficient waste water heat recovery.

Furthermore, due to said flexibility, the described waste water heat recovery device gives the advantage that appliances draining hot water can easily be grouped together so that the collected waste water from all of the grouped appliances may be fed into the waste water heat recovery device. This serves to maximize heat recovery in a household or a number of households efficiently with, for instance, only one waste water heat recovery device. So, the described two-stage assisted heat recovery device can also be used for large applications such as multi-family buildings and can preferably, in such a setting, be integrated with a large-scale ground source heat pump to cut installation costs further. Also, such a two-stage assisted heat recovery device can be used for large consumers, such as public swimming pools.

So, in the first waste water heat recovery unit or stage, a heat exchanger is able to recover most part of the heat of the waste hot water. This heat exchanger can integrate a heat buffer storage such as a phase change material buffer or can be split into several heat exchangers integrating different respective heat buffer storages with different working temperatures, for instance different phase change material buffers with several different latent temperatures, as explained below. Such a first waste water heat recovery unit is able to transfer the heat from the waste hot water to cold main water in order to get preheated main (process) water.

The remaining energy in the waste hot water can then, in the second waste water heat recovery unit or stage be transferred to the low temperature heat buffer storage, where energy can be stored as a low heat potential energy. For instance such a low temperature heat buffer storage can be realized by a so-called low energy phase change material (PCM) buffer (LEPB). Then, the heat pump of the second waste water heat recovery unit can gather the heat from the low-temperature heat buffer storage, e.g. the LEPB, process the low-temperature energy to high temperature energy, and finally store the energy in the high temperature heat buffer storage, for instance a high energy PCM buffer (HEPB). Preferably, each unit is mounted in-line according to the specific working temperature of each component.

Summarizing, there are two stages:

1) When waste hot water (WHW) goes on the drain circuit, that is, the waste water line, its heat is transferred to the heat exchanger and/or the heat buffer storage of the first waste water heat recovery unit. This first heat recovery stage will transfer the heat from the waste hot water directly to the cold process water, for instance, and preheat it, or the heat will be transferred and stored on the heat buffer storage, for instance with a PCM. As a result of this first heat recovery stage, the waste hot water has lost part of his energy and the process water is now preheated. From the preheated process water, a part may go straight to the mixer valve and another part may go to a heat buffer, for instance to the high temperature heat buffer storage of the second waste water heat recovery unit.

2) Then, the waste hot water, which has already lost a large part of its heat, goes on to the low-temperature heat buffer storage, for instance the LEPB. Then, the heat pump will gather the heat stored on the low temperature heat buffer storage, for instance the LEPB, "concentrate" it, and store it onto the high temperature heat buffer storage, for instance the HEPB. Here, the waste water at an outlet of the low-temperature heat buffer storage shall be compliant with water drain minimum temperature requirements. For instance, in most European countries, waste water needs to have a minimal temperature of 5°C in order to avoid freezing. The present design allows to meet these restrictions easily and avoids the waste water leaving the second waste water heat recovery unit to freeze. To achieve that, the low-temperature heat buffer storage preferably has a working temperature above water freezing temperature and the heat pump control system is preferably designed to stop the heat pump when the temperature of the low-temperature heat buffer storage reaches said required minimum temperature of, for instance, 5°C. For instance, a LEPB PCM with a latent temperature, that is a phase change temperature above water freezing temperature, for example at 5°C can be chosen to achieve this.

Therein, the smart selection of the working temperatures of the respective heat buffer storages, for instance of the PCM temperature or PCM latent temperature of PCM based heat buffer storages, may give significant advantages. If the first waste water heat recovery unit comprises a heat buffer storage, a relatively high working temperature, in particular working temperature higher than the working temperature of the low-temperature heat buffer storage of the second waste water heat recovery unit, can be used for preheating the cold process water without requiring the activation of the heat pump.

As for the second waste water heat recovery unit, two working temperatures have to be selected, for instance by choosing PCMs with different latent temperatures for the respective heat buffer storages.

Firstly, as the low-temperature heat buffer storage will be the heat sink for the heat pump, a lower working temperature needs to be chosen for the low-temperature heat buffer storage. The low-temperature heat buffer storage needs to capture the remaining energy from the first heat recovery unit or stage. Preferably, the working temperature of the low temperature heat buffer storage, for instance a latent temperature of a corresponding (low-temperature) PCM, should be chosen between a higher and a lower boundary. The higher boundary should be close to the yearly average main temperature at the installation location of the waste water heat recovery device. This setting will increase the overall heat recovery assisted cycle COP. The lower boundary shall comply with the water drain minimum temperature requirements at the installation location.

Secondly, as the high-temperature heat buffer storage needs to be able to store energy from the heat pump to heat up (preheated) process water to a comfortable temperature, a higher working temperature needs to be chosen for the high-temperature heat buffer storage. Preferably, the working temperature of the high-temperature heat buffer storage, for instance related temperature of a corresponding (high-temperature) PCM, should be chosen to be high enough to ensure a comfortable bath/shower, for instance 42°C, but not to high in order to guarantee a good performance of the heat pump.

Said use of heat buffer storages with a different working temperatures, for instance by means of PCM's with different latent temperatures makes it possible to downsize the heat pump compared to a waste water heat recovery system made of a heat exchanger and assisted with a heat pump where the heat recovery process has to be instantaneous. Consequently, a simple refrigerator compressor heat pump is, in the current setting, sufficient to amplify the heat from the low-temperature heat buffer storage such as a LEPB to the high-temperature heat buffer storage such as a HEPB for a domestic application. Obviously, large applications require bigger heat pump capacities, however the required capacity will be at least five times smaller as compared to the known waste water heat recovery systems which rely on instantaneous heat recovery.

In the context of this document, a heat recovery process involving only heat exchangers as heat recovery elements, like in most of the waste water heat recovery systems known from the state-of-the-art, maybe referred to as direct heat recovery. A heat recovery process involving a heat exchanger and a heat buffer storage such as a PCM buffer may be referred to as direct heat recovery with heat buffer, in particular with PCM buffer. A heat recovery process involving a heat pump with both low and high temperature heat buffers, that is, hot and cold energy buffers such as LEPB and HEPB, as well as at least one sensor and at least one actuator may be referred to as active heat pump heat recovery with heat buffer, in particular with PCM buffer.

As for direct heat recovery, be it with or without heat buffer, the first waste water heat recovery unit features heat exchanging capabilities sized in order to deal with the power rate of a shower or a bath draining flow rate for the waste hot water regarding the heat recovery process and, preferably, the cold process water from the main source for the preheating process in a preheating circuit which supplies both the heating circuit and the mixer tap/valve in preheated water. Supplying the mixer valve/tap with preheated water significantly reduces the amount of domestic hot water needed in order to get the same amount of mixed hot water for the shower, the bath, or any domestic hot water appliances.

As for active heat pump heat recovery, since it will consume electric energy, preferably temperature sensors will be needed for both low temperature and high temperature heat storage unit energy levels in order to calculate if it is worth triggering the heat pump or not. However, for example a low energy PCM buffer will always gather as much heat as possible from the waste hot water drain line even if the temperature difference $\Delta T$ between cold process water and waste hot water is not high enough to use a simple heat exchanger in the first waste water heat recovery unit effectively. Once the low temperature heat buffer storage contains enough heat that it is worth it to trigger the heat pump, a corresponding control system will start the heat pump.

The heat exchanger arrangement of the at least one first waste water heat recovery unit comprises a heat buffer storage configured to buffer heat that is transferred from waste water to process water in the first waste water heat recovery unit. The working temperature of the heat buffer storage of the first waste water heat recovery unit or the working temperatures of the respective heat buffers of the first waste water heat recovery units are higher than the working temperature of the low-temperature heat buffer storage of the second waste water heat recovery unit. This leads to an improvement of the overall efficiency of the system.

Therein the waste water heat recovery device comprises at least one additional first waste water heat recovery unit with a respective heat buffer storage, in particular one or two or three or four additional first waste water heat recovery units with respective heat buffer storages. Said additional first waste water heat recovery units may share the heat exchanger of the first waste water heat recovery unit. That is, different parts of the heat exchanger of the first waste water heat recovery unit may correspond to the one or more additional first water heat recovery units. The additional first waste water heat recovery units are arranged serially between the first waste water heat recovery unit and the second waste water heat recovery unit such that each subsequent waste water heat recovery unit is configured to be connected to or connected to the waste water line downstream of the precedent waste water heat recovery unit, and to the process water line downstream of the precedent waste water heat recovery unit, where the heat buffer storage of each subsequent first waste water heat recovery unit has a lower working temperature than the heat buffer storage of the preceding first waste water heat recovery unit.

So, when the waste water heat recovery device is configured to use a heat exchanger with a heat buffer storage in the first heat recovery unit, more heat buffer storages with other working temperatures, for example phase change materials will other latent temperatures, can be added to the loop, that is, the waste water line and the process water line, in order to improve overall efficiency of the system, reduce the power needed for the heat pump, and reduce the energy capacity for the heat buffer storages in the second waste water heat recovery unit. If PCMs are used for the heat buffer storages, the corresponding working temperatures, that is, the latent temperatures can be calculated using the following equation:

$$T_{PCM}(n) = n * (T_{DHW} - T_{LEPD})/(n_{max}+1) + T_{LEPB},$$

with $T_{DHW}$ being the domestic hot water temperature needed for domestic hot water appliances, which shall be higher than the working temperature of the high-temperature heat buffer storage, $T_{LEPD}$ being the selected temperature for the working temperature of the low-temperature heat buffer storage, and $n_{max}$ being the number

of heat buffer storages, that is PCM buffers on the waste water circuit (these shall not include the high-temperature heat buffer storage).

When exemplarily setting $T_{DHW}$ to 36°C and the allowable temperature of the waste water after the second waste water heat recovery unit to 5°C, we arrive, when using three different heat buffer storages with distinct working temperatures, at latent temperatures of 28.25°C for the first PCM buffer, 20.5°C for the second PCM buffer, and 12.75°C for the third PCM buffer. Consequently, the LEPB latent temperature control the above 5°C, circa 7°C, and the HEPB latent temperature shall be above 40°C, circa 42°C.

In another preferred embodiment, one, several or all of the heat buffer storages comprise a phase-change-material, with the respective phase change temperature corresponding to the respective working temperature. This gives the advantage that the working temperatures of the respective heat buffer storages can be defined particularly well, leading to an increased efficiency of the system. Another advantage is that Legionella are automatically taken care of, as the heat storage material is not hot water, which leads to enhance flexibility in temperature management.

In another advantageous embodiment, the heat pump comprises at least one compressor, a condenser, an evaporator, and another heat exchanger.

In yet another advantageous embodiment, the process water line is connected to or configured to be connected to a cold water main (source) and/or a (domestic) hot water user to provide process water therefrom to the first and, consequently, also the second waste water heat recovery unit. This results in a particularly effective recovery of heat from the waste water to the process water.

In a further advantages embodiment, the process water line is configured to be connected to or connected to a process water appliance such as the hot water user by means of a first connection located downstream of the second waste water heat recovery unit and by means of a second connection located downstream of the one or more first waste water heat recovery units and upstream of the second waste water heat recovery unit. This results in a particularly flexible setup, where the water preheated by the first waste water heat recovery unit may either be further heated or used directly.

In another preferred embodiment, the waste water heat recovery device comprises cleaning means configured to clean the first waste water heat recovery unit and/or the second waste water heat recovery unit. In particular, this can be achieved by flushing or purging the heat exchanger of the first waste water heat recovery unit and/or an heat exchanger of the second waste water heat recovery unit.

In particular, the cleaning means may be configured to sequentially clean the two units, for instance in a first sequence the second waste water heat recovery unit, i.e. the heat exchanger of the heat pump, and in a second sequence the second waste water heat recovery unit, i.e. the heat exchanger of the first waste water heat recovery unit. This can be done by flushing clean/process water via backwash lines into the respective heat exchangers and draining, at least for the heat exchanger of the first waste water heat recovery unit, the cleaning water through a bypass drain line.

Therein, the waste water heat recovery device may also comprise triggering means, in particular triggering means with an overflow sensor for indicating an overflow in the waste water line, configured to automatically activate the cleaning means if a preset or presettable criterion is met. To this end, the waste water line may comprise an overflow box, eventually connected to a bypass line bypassing the first waste water heat recovery unit and/or the second waste water heat recovery unit. The overflow box is preferably also connected to the waste water line. The overflow sensor and/or the overflow box may be used to detect when the first and/or the second waste water heat recovery unit, in particular respective heat exchangers, get sludged, as the overflow box is installed in the waste water line upstream of the waste water heat recovery units in such a way that, when one or both of the waste water heat recovery units or their corresponding heat exchangers gets sludged, the waste water level inside the overflow box rises, and a triggering means, for example a floating element, triggers a switch. In such a case, the cleaning means will wait until the heat recovery session is over to then clean the two units, preferably in the sequential way described above.

In particular, the criterion may comprise an overflow signal of the overflow sensor and/or the passing of a preset time period. The latter serves to establish preset time intervals for cleaning the first waste water heat recovery unit and/or the second waste water heat recovery unit on a regular basis and thereby prevent sludging. The former serves to clean the first waste water heat recovery unit and/or the second waste water heat recovery unit when they are already at least partly sludged.

The prevention of sludging increases the efficiency of the waste water heat recovery device. To avoid undesired behaviors, a minimum time span between two cleaning cycles may be predefined by a factory setting. As each installation setting is unique, the cleaning means may consider the average time between two cleaning cycles and automatically report any anomalies, such as, for example, a heat exchanger sealed by an abnormal material, which may be detected by the overflow signal of the overflow sensor right after finishing the cleaning sequences defined above. In some cases, the automatic cleaning procedure is not sufficient, and the warm waste water heat recovery device requires the intervention of a technician. In order to prevent any false alarm due to the uniqueness of each case or installation scenario, a preset number of first cleaning cycles, for instance the first four cleaning cycles, can be used as calibration cycles for the system.

Another aspect relates to a method to recover waste water heat, comprising the method step of heating process water in a process water line by transferring heat from waste water in a waste water line to the process water by means of a heat exchanger arrangement in a first waste water heat recovery unit, the first waste water heat recovery unit being connected to the waste water line and to the process water line, and the method step of further heating the process water in the process water line by transferring heat from the waste water to the process water by means of a heat pump arrangement in a second waste water heat recovery unit, the second waste water heat recovery unit being connected to the waste water line downstream of the first waste water heat recovery unit and to the clean water line downstream of the first waste water heat recovery unit. Therein, in the second waste water heat recovery unit, heat of the waste water in the waste water line is extracted by a low-temperature heat buffer storage of the heat pump arrangement and stored in said low-temperature heat buffer storage, the heat stored in the low-temperature heat buffer storage is transferred to a high-temperature heat buffer storage of the heat pump arrangement by a heat pump of the heat pump arrangement, and the heat transferred by the heat pump is stored in the high-temperature heat buffer storage and provided to the process water in the process water line by said high-temperature heat buffer storage.

Advantageous embodiments and advantages of the method to recover waste water heat correspond to the advantageous embodiments and advantages of the waste water heat recovery device.

The described device and method may result, for instance, in the behavior described in the following.

Case of shower: For recovering waste heat from a shower taken, the most efficient design using a heat pump and a phase change material is a first waste water heat recovery unit with heat exchanger and without heat storage buffer, and a second waste water heat recovery unit comprising a LEPB, a heat pump, and a HEPB.

While the waste water heat recovery device is on standby, the temperature inside the heat exchanger similar to an indoor ambient temperature. The high temperature required for the domestic hot water production is provided by the HEPB PCM. Any request for domestic hot water will mechanically make flow cold process water towards the first heat exchanger, which, at this stage, does not contribute to heating up the cold process water. Then, the water flows from the heat exchanger to the HEPB, which transfers the stored heat from the PCM to the process water. During the first seconds, the HEPB has to provide 100% of the heat required to warm up the cold process water to domestic hot water standards if no additional heat source such as a boiler is available. Later on, as the temperature of the waste hot water is higher than the temperature of the cold process water, this percentage progressively decreases and usually stabilizes around 30% for the HEPB contribution to the domestic hot water, as about 70% of the required heat usually comes from the heat exchanger.

After flowing through the heat exchanger of the first waste water heat recovery unit, the waste water flows to the LEPB of the second waste water heat recovery unit, which extracts and stores the remaining available heat of the waste water. Once the LEPB heat/energy level is high enough, the heat pump is triggered and starts to transfer heat to the HEPB.

As shower heat losses are low and the heat pump can provide more high-temperature heat than it gathers from the cold sink, there may even be no need for an external heating system, i.e. the waste water heat recovery device alone may be able to provide sufficient heat for the hot water appliance, in particular the shower. The sizing of both HEPB and LEPB will depend on the number showers needed in a row, as will the heat pump capacity.

Case of bath: In order to recover heat from the waste water of a bath, the waste water heat recovery device needs to be adapted accordingly. When heating water for a shower, it is possible to use, during the shower, the heat recovered by a simple heat exchanger from the waste water of said shower. For a bath, domestic hot water is needed while there is no waste hot water in the waste water line, and when there is hot waste water in the waste water line, there is no need for domestic hot water. Therefore, it is advantageous to use one or several heat exchangers with respective heat buffer storages, for example PCM buffers, to extract heat from the waste hot water and transfer it to the cold process water, and store the heat for a later use. Such a design will also be functional in case of shower, but it will be less efficient as compared to a simple heat exchanger without heat buffer storage in the first waste water heat recovery unit.

Depending on the number of these "direct heat recovery with PCM buffer" stages, that is, the number of first waste water heat recovery units, their contribution to the required heat will be from about 40% up to 60%. Consequently, the size of the respective heat buffer storages, in particular HEPB and LEPB will be higher as compared to the shower case. In addition, the implementation of the described system may require an external source of heat at least for initially providing the HEPB and or the PCM buffer of the first waste water heat recovery unit with heat. As previously described for the shower case, HEPB and LEPB heat/energy levels may be monitored in order to start the heat pump when it is worth it, that is, when it saves more energy than it costs.

For other domestic hot water consumers like for example washing machines or dishwashers, heat in the waste water can be partially recovered by any of the described systems.

In order to maximize the heat recovery potential, the temperature of the low-temperature heat buffer storage, in particular the temperature of the LEPB, has to be kept as low as possible. As a consequence, the temperature of the high-temperature heat buffer storage, in particular the temperature of the HEPB, will be warm enough to ensure comfort by providing process water of at least 40°C. One control strategy for the heat pump leading to such a behavior is to

- activate the active heat pump driven heat recovery when the temperature T2 of the high-temperature heat buffer storage is below 45°C and, at the same time, the temperature T1 of the low-temperature heat buffer storage is above 5°C, or when the temperature T1 of the low-temperature heat buffer storage is above 20°C;

- deactivate the active heat pump driven heat recovery when the temperature T2 of the high temperature heat buffer is reaching 55°C or the temperature T1 of the low temperature heat buffer storage is 5°C or below.

Because the described waste water heat recovery device may be used as a stand-alone system providing domestic hot water without any other hot water source, under certain circumstances such as long-time non-usage, extremely low temperature of process water and alike, eventually, the heat pump will not be able to provide proper domestic hot water services. To overcome this issue, and electric booster heater can be placed on the high-temperature heat buffer storage as auxiliary heat source, or an additional coil on the high-temperature heat buffer storage can be connected to a central heating system as auxiliary heat source. The auxiliary heat sources may then be activated by the waste water heat recovery device when the temperature T2 of the high-temperature heat buffer is below 45°C and the temperature T1 of the low-temperature heat buffer storage is below 5°C. Correspondingly, the auxiliary heat sources may be deactivated by the waste water heat recovery device when the temperature T2 of the high-temperature heat buffer is about or above 55°C or the temperature T1 of the low-temperature heat buffer storage is above 5°C.

The features and combinations of features described above, as well as the features and combinations of features disclosed in the figures' description or the figures alone may not only be used alone or in the described combination, but also with other features or without some of the disclosed features without leaving the scope of the invention as defined in the claims.

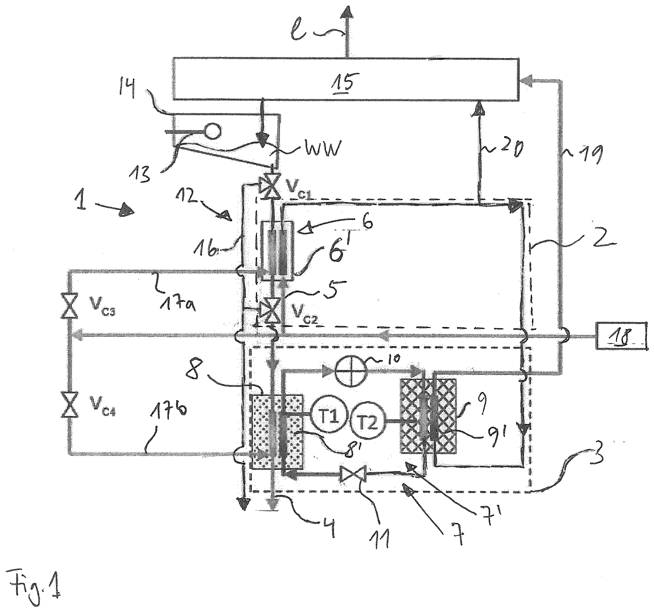

Exemplary embodiments are further described in the following by means of schematic drawings. Therein, Fig. 1 shows an exemplary embodiment of a waste water heat recovery device.

In Fig. 1, an exemplary embodiment of a waste water heat recovery device is shown. Said waste water heat recovery device 1 comprises first waste water heat recovery unit 2 and a second waste water heat recovery unit 3. Both first and second waste water heat recovery unit 2, 3 are connected to a waste water line 4 and a process water line 5. In both waste water line 4 and process water line 5, the second waste water heat recovery unit 3 is placed downstream of the first waste water heat recovery unit 2.

The first waste water heat recovery unit 2 comprises a heat exchanger arrangement 6 to transfer heat from waste water in the waste water line 4 to process water in the process water line 5 by means of a heat exchanger 6'. The heat exchanger arrangement 6 comprises a heat buffer storage, for instance with a PCM as heat buffer (not shown).

The second waste water heat recovery unit 3 comprises a heat pump arrangement 7 with a heat pump 7' which comprises a cooling heat exchanger 8, which works as a condenser here to extract heat from the waste water line 4, and a heating heat exchanger 9 to transfer the extracted heat to the process water line 5, as well as a compressor 10 and an evaporator 11. In addition, the heat pump arrangement 7 comprises a low-temperature heat buffer storage 8' integrated in the cooling heat exchanger 8 and a high-temperature heat buffer storage 9' integrated in the heating heat exchanger 9. In the present example, the low-temperature heat buffer storage 8' is a LEPB and the high-temperature heat buffer storage 9' is a HEPB.

Furthermore, in the present example, the second waste water heat recovery unit 3 comprises two temperature sensors T1 and T2, where temperature sensor T1 measures the temperature of the low-temperature heat buffer storage 8' and the temperature sensor T2 measures the temperature of the high-temperature heat buffer storage 9'.

In the present example, the waste water recovery device 1 also comprises cleaning means 12 for cleaning the two waste water heat recovery units 2, 3. The cleaning means 12 are equipped with triggering means, which in the present case comprise an overflow sensor 13 in an overflow box 14 to automatically activate the cleaning means 12 if the overflow sensor 13 registers overflowing of the overflow box 14. The overflow box 14 is configured in a way that waste water WW from a domestic hot water user 15 such as a bath or a shower flows into the overflow box 14 before flowing into the waste water line 4. Also, in the present case, the cleaning means 12 comprise a cleaning/bypass drain line 16, which allows to bypass the waste water line 4 in case of an overflow.

In the present example, the cleaning means 12 also comprise to backwash lines 17a, 17b, that are connected to the first and second waste water heat recovery unit 2, 3, respectively, as well as to a cold main water source 18 in the present example. The cold main water source 18 also supplies the process water line 5 with cold process water in the present example. The backwash line 17a features a control valve $V_{C3}$ to allow the cleaning of the first waste water heat recovery unit 2, and the second backwash line 17b comprises a corresponding control valve $V_{C4}$ that can be opened to flush the second waste water heat recovery unit 3. In addition, the cleaning means 12 comprise further control valves $V_{C1}$, $V_{C2}$ which connect the bypass plane line 16 with the waste water line 4 upstream of the first waste heat recovery unit 2 in case of control valve $V_{C1}$ and downstream of the first waste water heat recovery unit 2 and upstream of the second waste water heat recovery unit 3 in case of control valve $V_{C2}$. Said control valves $V_{C1}$ and $V_{C2}$ are three-way valves in the present example in order to allow a selective bypassing of first and second waste water heat recovery unit 2, 3, respectively.

In the present example, the waste water heat recovery device 1 is connected to the cold main water source 18 and provides heated process water to the domestic hot water user 15. In this example, the waste water heat recovery device 1 may provide hot water to the domestic hot water user 15 directly after it has been heated by both first waste water heat recovery unit 2 and second waste water heat recovery unit 3 by a first connection 19 or after it has been heated only by the first waste water heat recovery unit 2 by a second connection 20. For the sake of completeness, it has to be pointed out that a significant fraction of the heat in the domestic hot water user 15 disappears as thermal loss I.

In the following, exemplary use cases for the waste water heat recovery device 1 are explained to deepen the understanding of the invention.

   i) Shower scenario, where the domestic hot water user 15 is a shower in use.

In a first phase, e.g. the first minute or so of the use of the shower, the device 1 remains passive. Because the waste water heat recovery device 1 is equipped with PCM buffers as low-temperature and high-temperature heat buffer storage 8', 9', the device enforces the specific heat pump triggering rules depending on the state of charge of both PCM buffers LEPB and HEPB. In this passive state, the waste water heat recovery device usually recovers already about 12.5 kW of heat. The flow on the draining circuit, that is, in the waste water line 4, and the preheating circuit, that is in the process water line 5 through the heat exchanger 6' is the same, typically 10 L per minute. Any left-over heat in the waste water will be gathered by the LEP be PCM buffer 8'.

In a second phase, when the heat exchanger 6' is warmed up, the flow of the preheated water through the high-temperature heat buffer storage 9' decreases in the present example due to the mixing valve regulation realized by second connection 20. So, most of the heat recovery is achieved by the heat exchanger 6', which feeds the high-temperature heat buffer storage 9' as well as, by said second connection 20, domestic hot water user 15 directly. This allows downsizing of low-temperature heat buffer storage 8' (LEPB), heat pump 7', and high-temperature heat buffer storage 9' (HEPB).

Independently of hot water being required by domestic hot water user 15 or not, when the preset conditions for heat pumps activation are met, the heat pump 7' is switched on as (auxiliary) heat source.

i) Bath scenario, where the domestic hot water user 15 is a bath in use.

In case of the domestic hot water user 15 corresponding to a bath taken, during the bath filling, only the domestic hot water production line will be used. The cold water from the main source 18 will be first preheated by the heat exchanger arrangement 6 of the first waste water heat recovery unit 2, which, in this case, is equipped with a PCM buffer as heat buffer storage which will provide most part of the heat. Again, this allows downsizing of low-temperature heat buffer storage 8' (LEPB), heat pump 7', and high-temperature heat buffer storage 9' (HEPB). The preheated water in the process water line 5 is then heated to domestic hot water temperature comfort standard by the high-temperature heat buffer storage 9', where, obviously, heat has to be stored beforehand in order to achieve this. As the filling of a bath with hot water requires a considerable amount of energy, the heat exchanger arrangement 6 comprising the PCM buffer as heat buffer storage may be connected to an auxiliary source of heat.

When the bath is flushed, the heat from the waste heat water is first collected by the heat exchanger arrangement 6 with the PCM buffer as heat buffer storage, and the left over heat is gathered by the low-temperature heat buffer storage 8' (LEPB) for future heat pump operation.

Independently of hot water being required by domestic hot water user 15 or not, when the preset conditions for heat pumps activation are met, the heat pump 7' is switched on as (auxiliary) heat source.

**Claims**

1. A waste water heat recovery device (1), comprising

    - at least one first waste water heat recovery unit (2) configured to be connected to a waste water line (4) and to a process water line (5), where the first waste water heat recovery unit (2) comprises a heat exchanger arrangement (6) to transfer heat from waste water (WW) in the waste water line (4) to process water in the process water line (5);
    - a second waste water heat recovery unit (3) configured to be connected to the waste water line (4), downstream of the first waste water heat recovery unit (2), and to the process water line (5), downstream of the first waste water heat recovery unit (2), where the second waste water heat recovery unit (3) comprises a heat pump arrangement (7) to transfer heat from waste water in the waste water line (4) to process water in the process water line (5);

**characterized in that**
the heat pump arrangement (7) comprises a low-temperature heat buffer storage (8'), a high-temperature heat buffer storage (9'), and a heat pump (7'), where

    - the low-temperature heat buffer storage (8') has a lower working temperature than the high-temperature heat buffer storage (9') and is configured to extract heat from waste water in the waste water line (4) and to store the extracted heat,
    - the heat pump (7') is configured to transfer the stored heat from the low-temperature heat buffer storage (8') to the high-temperature heat buffer storage (9'), and
    - the high-temperature heat buffer storage (9') is configured to store the heat transferred by the heat pump (7') and to provide said heat to process water in the process water line (5),

where

    - the heat exchanger arrangement (6) of the first waste water heat recovery unit (2) comprises a heat buffer storage configured to buffer heat that is transferred from waste water to process water in the first waste water heat recovery unit (2), and the working temperature of the heat buffer storage of the first waste water heat recovery unit (2) is higher than the working temperature of the low-temperature heat buffer storage (8') of the second waste water heat recovery unit (3),
    - the waste water heat recovery device (1) comprises at least one additional first waste water heat recovery unit (2) with respective heat buffer storage, where the additional first waste water heat recovery units (2) are arranged serially between the first waste water heat recovery unit (2) and the second waste water heat recovery unit (3) such that
    - each subsequent waste water heat recovery unit (2, 3) is configured to be connected to the waste water line (4) downstream of the precedent waste water heat recovery unit (2, 3), and to the process water line (5) downstream of the precedent waste water heat recovery unit (2, 3), where
    - the heat buffer storage of each subsequent first waste water heat recovery unit (2) has a lower working temperature than the heat buffer storage of the preceding first waste water heat recovery unit (2), where

the heat buffer storages are devices with the purpose of storing heat with a defined capacity.

2. The waste water heat recovery device (1) of preceding claim 1, **characterized in**
two or three or four additional first waste water heat recovery units (2) with respective heat buffer storages.

3. The waste water heat recovery device (1) of any of the preceding claims, **characterized in** temperature sensors for both low temperature and high temperature heat storage unit energy levels and a control system to trigger the heat pump once the low temperature heat buffer storage contains enough heat that it is worth triggering the pump.

4. The waste water heat recovery device (1) of any of the preceding claims, **characterized in that** one, several or all of the heat buffer storages comprise a phase-change-material, with the respective phase-change temperature corresponding to the respective working temperature.

5. The waste water heat recovery device (1) of any of the preceding claims, **characterized in that** the heat pump (7') comprises at least one compressor (10), a condenser, an evaporator (11), and another heat exchanger (8).

6. The waste water heat recovery device (1) of any of the preceding claims, **characterized in that** the process water line (5) is configured to be connected to a cold water main (18) to provide process water thereof to the first waste water heat recovery unit (2).

7. The waste water heat recovery device (1) of any of the preceding claims, **characterized in that** the process water line (5) is configured to be connected to a process water appliance (15) by means of a first connection (19) located downstream of the second waste water heat recovery unit (3) and by means of a second connection (20) located downstream of the first waste water heat recovery unit or units (2) and upstream of the second waste water heat recovery unit (3).

8. The waste water heat recovery device (1) of any of the preceding claims, **characterized by**

   cleaning means (12) configured to clean the first waste water heat recovery unit (2) and/or the second waste water heat recovery unit (3), in particular by flushing the heat exchanger (6') of the first waste water heat recovery unit (2) and/or the heat exchanger (8) of the second waste water heat recovery unit (3).

9. The waste water heat recovery device (1) of claim 8, **characterized by** triggering means, in particular triggering means comprising an overflow sensor (13) for indicating an overflow in the waste water line (4), configured to automatically activate the cleaning means (12) if a preset criterion is met, where, in particular, the criterion comprises an overflow signal of the overflow sensor (13) and/or the passing of a preset time period.

10. A method to recover waste water heat, comprising the method steps of

   a) heating process water in a process water line (5) by transferring heat from waste water in a waste water line (4) to the process water by means of a heat exchanger arrangement (6) in a first waste water heat recovery unit (2), the first waste water heat recovery unit (2) being connected to the waste water line (4) and to the process water line (5),
   b) further heating the process water in the process water line (5) by transferring heat from the waste water to the process water by means of a heat pump arrangement (7) in a second waste water heat recovery unit (3), the second waste water heat recovery unit (3) being connected to the waste water line (4) downstream of the first waste water heat recovery unit (2) and to the clean water line downstream of the first waste water heat recovery unit (2), wherein, in the second waste water heat recovery unit (3),

      - heat of the waste water in the waste water line (4) is extracted by a low-temperature heat buffer storage (8') of the heat pump arrangement (7) and stored in said low-temperature heat buffer storage (8'),
      - the heat stored in the low-temperature heat buffer storage (8') is transferred to a high-temperature heat buffer storage (9') of the heat pump arrangement (7) by a heat pump of the heat pump arrangement (7), and
      - the heat transferred by the heat pump is stored in the high-temperature heat buffer storage (9') and provided to the process water in the process water line (5) by said high-temperature heat buffer storage (9'),

   where

      - heat that is transferred from waste water to process water in the first waste water heat recovery unit (2) is buffered by a heat buffer storage of the heat exchanger arrangement (6) of the first waste water heat recovery unit (2) with the working temperature of the heat buffer storage of the first waste water heat recovery unit (2) being higher than the working temperature of the low-temperature heat buffer storage (8') of the second waste water heat recovery unit (3),

wherein

- the waste water heat recovery device (1) comprises at least one additional first waste water heat recovery unit (2) with respective heat buffer storages, where the additional first waste water heat recovery units (2) are arranged serially between the first waste water heat recovery unit (2) and the second waste water heat recovery unit (3) such that
- each subsequent waste water heat recovery unit (2, 3) is configured to be connected to the waste water line (4) downstream of the precedent waste water heat recovery unit (2, 3), and to the process water line (5) downstream of the precedent waste water heat recovery unit (2, 3), where
- the heat buffer storage of each subsequent first waste water heat recovery unit (2) has a lower working temperature than the heat buffer storage of the preceding first waste water heat recovery unit (2), where the heat buffer storages are devices with the purpose of storing heat with a defined capacity.

## Patentansprüche

**1.** Abwasserwärmerückgewinnungseinrichtung (1), umfassend:

- zumindest eine erste Abwasserwärmerückgewinnungseinheit (2), die eingerichtet ist, mit einer Abwasserleitung (4) und einer Brauchwasserleitung (5) verbunden zu werden, wobei die erste Abwasserwärmerückgewinnungseinheit (2) eine Wärmetauscheranordnung (6) umfasst, um Wärme von Abwasser (WW) in der Abwasserleitung (4) an Brauchwasser in der Brauchwasserleitung (5) zu übertragen;
- eine zweite Abwasserwärmerückgewinnungseinheit (3), die eingerichtet ist, mit der Abwasserleitung (4) stromabwärts der ersten Abwasserwärmerückgewinnungseinheit (2) und mit der Brauchwasserleitung (5) stromabwärts der ersten Abwasserwärmerückgewinnungseinheit (2) verbunden zu werden, wobei die zweite Abwasserwärmerückgewinnungseinheit (3) eine Wärmepumpenanordnung (7) umfasst, um Wärme von Abwasser in der Abwasserleitung (4) an Brauchwasser in der Brauchwasserleitung (5) zu übertragen;

**dadurch gekennzeichnet, dass** die Wärmepumpenanordnung (7) einen Niedertemperatur-Wärmepufferspeicher (8'), einen Hochtemperatur-Wärmepufferspeicher (9') und eine Wärmepumpe (7') umfasst, wobei

- der Niedertemperatur-Wärmepufferspeicher (8') eine niedrigere Arbeitstemperatur als der Hochtemperatur-Wärmepufferspeicher (9') aufweist und eingerichtet ist, dem Abwasser in der Abwasserleitung (4) Wärme zu entziehen und die entzogene Wärme zu speichern,
- die Wärmepumpe (7') eingerichtet ist, die gespeicherte Wärme aus dem Niedertemperatur-Wärmepufferspeicher (8') an den Hochtemperatur-Wärmepufferspeicher (9') zu übertragen, und
- der Hochtemperatur-Wärmepufferspeicher (9') eingerichtet ist, die von der Wärmepumpe (7') übertragene Wärme zu speichern und diese Wärme an das Brauchwasser in der Brauchwasserleitung (5) abzugeben,

wobei

- die Wärmetauscheranordnung (6) der ersten Abwasserwärmerückgewinnungseinheit (2) einen Wärmepufferspeicher umfasst, der eingerichtet ist, Wärme zu puffern, die in der ersten Abwasserwärmerückgewinnungseinheit (2) von Abwasser an Brauchwasser übertragen wird, und die Arbeitstemperatur des Wärmepufferspeichers der ersten Abwasserwärmerückgewinnungseinheit (2) höher ist als die Arbeitstemperatur des Niedertemperatur-Wärmepufferspeichers (8') der zweiten Abwasserwärmerückgewinnungseinheit (3),
- die Abwasserwärmerückgewinnungseinrichtung (1) zumindest eine zusätzliche erste Abwasserwärmerückgewinnungseinheit (2) mit entsprechendem Wärmepufferspeicher umfasst, wobei die zusätzlichen ersten Abwasserwärmerückgewinnungseinheiten (2) zwischen der ersten Abwasserwärmerückgewinnungseinheit (2) und der zweiten Abwasserwärmerückgewinnungseinheit (3) derart seriell angeordnet sind, dass
- jede nachfolgende Abwasserwärmerückgewinnungseinheit (2, 3) eingerichtet ist, mit der Abwasserleitung (4) stromabwärts der vorhergehenden Abwasserwärmerückgewinnungseinheit (2, 3) und mit der Brauchwasserleitung (5) stromabwärts der vorhergehenden Abwasserwärmerückgewinnungseinheit (2, 3) verbunden zu werden, wobei
- der Wärmepufferspeicher jeder nachfolgenden ersten Abwasserwärmerückgewinnungseinheit (2) eine niedrigere Arbeitstemperatur aufweist als der Wärmepufferspeicher der vorhergehenden ersten Abwasserwärmerückgewinnungseinheit (2), wobei
- die Wärmepufferspeicher Einrichtungen mit dem Zweck des Speicherns von Wärme mit einer definierten Kapazität sind.

2. Abwasserwärmerückgewinnungseinrichtung (1) gemäß dem vorangehenden Anspruch 1, **gekennzeichnet durch** zwei oder drei oder vier zusätzliche erste Abwasserwärmerückgewinnungseinheiten (2) mit entsprechenden Wärmepufferspeichern.

3. Abwasserwärmerückgewinnungseinrichtung (1) gemäß einem der vorangehenden Ansprüche, **gekennzeichnet durch** Temperatursensoren sowohl für Niedertemperatur- und Hochtemperatur-Wärmespeichereinheit-Energieniveaus und ein Steuersystem zum Aktivieren der Wärmepumpe, sobald der Niedertemperatur-Wärmepufferspeicher genug Wärme enthält, dass sich Aktivieren der Pumpe lohnt.

4. Abwasserwärmerückgewinnungseinrichtung (1) gemäß einem der vorangehenden Ansprüche, **dadurch gekennzeichnet, dass** einer, mehrere oder alle der Wärmepufferspeicher ein Phasenwechselmaterial enthalten, wobei die jeweilige Phasenwechseltemperatur der jeweiligen Arbeitstemperatur entspricht.

5. Abwasserwärmerückgewinnungseinrichtung (1) gemäß einem der vorangehenden Ansprüche, **dadurch gekennzeichnet, dass** die Wärmepumpe (7') zumindest einen Verdichter (10), einen Kondensator, einen Verdampfer (11) und einen weiteren Wärmetauscher (8) umfasst.

6. Abwasserwärmerückgewinnungseinrichtung (1) gemäß einem der vorangehenden Ansprüche, **dadurch gekennzeichnet, dass** die Brauchwasserleitung (5) eingerichtet ist, mit einer Kaltwasserhauptleitung (18) verbunden zu werden, um deren Brauchwasser an die erste Abwasserwärmerückgewinnungseinheit (2) abzugeben.

7. Abwasserwärmerückgewinnungseinrichtung (1) gemäß einem der vorangehenden Ansprüche, **dadurch gekennzeichnet, dass** die Brauchwasserleitung (5) eingerichtet ist, mittels einer ersten Verbindung (19), die sich stromabwärts von der zweiten Abwasserwärmerückgewinnungseinheit (3) befindet, und mittels einer zweiten Verbindung (20), die sich stromabwärts von der ersten Abwasserwärmerückgewinnungseinheit oder Einheiten (2) und stromaufwärts von der zweiten Abwasserwärmerückgewinnungseinheit (3) befindet, mit einer Brauchwassereinrichtung (15) verbunden zu werden.

8. Abwasserwärmerückgewinnungseinrichtung (1) gemäß einem der vorangehenden Ansprüche, **gekennzeichnet durch** ein Reinigungsmittel (12), das eingerichtet ist, die erste Abwasserwärmerückgewinnungseinheit (2) und/oder die zweite Abwasserwärmerückgewinnungseinheit (3), insbesondere durch Spülen des Wärmetauschers (6') der ersten Abwasserwärmerückgewinnungseinheit (2) und/oder des Wärmetauschers (8) der zweiten Abwasserwärmerückgewinnungseinheit (3), zu reinigen.

9. Abwasserwärmerückgewinnungseinrichtung (1) gemäß Anspruch 8, **gekennzeichnet durch** ein Aktivierungsmittel, insbesondere ein Aktivierungsmittel mit einem Überlaufsensor (13) zum Anzeigen eines Überlaufs in der Abwasserleitung (4), das eingerichtet ist, das Reinigungsmittel (12) automatisch zu aktivieren, wenn ein voreingestelltes Kriterium erfüllt ist, wobei das Kriterium insbesondere ein Überlaufsignal des Überlaufsensors (13) und/oder das Verstreichen eines voreingestellten Zeitraums umfasst.

10. Verfahren zur Rückgewinnung von Abwasserwärme, umfassend die Verfahrensschritte des:

    a) Erwärmens von Brauchwasser in einer Brauchwasserleitung (5) durch Übertragen von Wärme von Abwasser in einer Abwasserleitung (4) an das Brauchwasser mittels einer Wärmetauscheranordnung (6) in einer ersten Abwasserwärmerückgewinnungseinheit (2), wobei die erste Abwasserwärmerückgewinnungseinheit (2) mit der Abwasserleitung (4) und mit der Brauchwasserleitung (5) verbunden ist,
    b) weiteren Erwärmens des Brauchwassers in der Brauchwasserleitung (5) durch Übertragen von Wärme von dem Abwasser an das Brauchwasser mittels einer Wärmepumpenanordnung (7) in einer zweiten Abwasserwärmerückgewinnungseinheit (3), wobei die zweite Abwasserwärmerückgewinnungseinheit (3) mit der Abwasserleitung (4) stromabwärts von der ersten Abwasserwärmerückgewinnungseinheit (2) und mit der Reinwasserleitung stromabwärts von der ersten Abwasserwärmerückgewinnungseinheit (2) verbunden ist, wobei in der zweiten Abwasserwärmerückgewinnungseinheit (3)

    - Wärme des Abwassers in der Abwasserleitung (4) durch einen Niedertemperatur-Wärmepufferspeicher (8') der Wärmepumpenanordnung (7) entzogen und in dem Niedertemperatur-Wärmepufferspeicher (8') gespeichert wird,

- die in dem Niedertemperatur-Wärmepufferspeicher (8') gespeicherte Wärme durch eine Wärmepumpe der Wärmepumpenanordnung (7) an einen Hochtemperatur-Wärmepufferspeicher (9') der Wärmepumpenanordnung (7) übertragen wird, und
- die von der Wärmepumpe übertragene Wärme in dem Hochtemperatur-Wärmepufferspeicher (9') gespeichert wird und von dem Hochtemperatur-Wärmepufferspeicher (9') an das Brauchwasser in der Brauchwasserleitung (5) abgegeben wird,

wobei

- Wärme, die in der ersten Abwasserwärmerückgewinnungseinheit (2) von Abwasser auf Brauchwasser übertragen wird, durch einen Wärmepufferspeicher der Wärmetauscheranordnung (6) der ersten Abwasserwärmerückgewinnungseinheit (2) gepuffert wird, wobei die Arbeitstemperatur des Wärmepufferspeichers der ersten Abwasserwärmerückgewinnungseinheit (2) höher ist als die Arbeitstemperatur des Niedertemperatur-Wärmepufferspeichers (8') der zweiten Abwasserwärmerückgewinnungseinheit (3),

wobei

- die Abwasserwärmerückgewinnungseinrichtung (1) zumindest eine zusätzliche erste Abwasserwärmerückgewinnungseinheit (2) mit entsprechenden Wärmepufferspeichern umfasst, wobei die zusätzlichen ersten Abwasserwärmerückgewinnungseinheiten (2) zwischen der ersten Abwasserwärmerückgewinnungseinheit (2) und der zweiten Abwasserwärmerückgewinnungseinheit (3) derart seriell angeordnet sind, dass
- jede nachfolgende Abwasserwärmerückgewinnungseinheit (2, 3) eingerichtet ist, mit der Abwasserleitung (4) stromabwärts der vorhergehenden Abwasserwärmerückgewinnungseinheit (2, 3) und mit der Brauchwasserleitung (5) stromabwärts der vorhergehenden Abwasserwärmerückgewinnungseinheit (2, 3) verbunden zu werden,

wobei

- der Wärmepufferspeicher jeder nachfolgenden ersten Abwasserwärmerückgewinnungseinheit (2) eine niedrigere Arbeitstemperatur aufweist als der Wärmepufferspeicher der vorhergehenden ersten Abwasserwärmerückgewinnungseinheit (2), wobei die Wärmepufferspeicher Einrichtungen mit dem Zweck des Speicherns von Wärme mit einer definierten Kapazität sind.

## Revendications

1. Dispositif de récupération de la chaleur des eaux usées (1), comprenant

   - au moins une première unité de récupération de la chaleur des eaux usées (2), configurée afin d'être connectée à une canalisation d'eaux usées (4) et à une canalisation d'eau de traitement (5), dans lequel la première unité de récupération de la chaleur des eaux usées (2) comprend un agencement d'échangeur de chaleur (6) destiné à transférer la chaleur à partir des eaux usées (WW) dans la canalisation d'eaux usées (4), vers l'eau de traitement dans la canalisation d'eau de traitement (5) ;
   - une seconde unité de récupération de la chaleur des eaux usées (3), configurée afin d'être connectée à la canalisation d'eaux usées (4), en aval de la première unité de récupération de la chaleur des eaux usées (2), et à la canalisation d'eau de traitement (5), en aval de la première unité de récupération de la chaleur des eaux usées (2), dans lequel la seconde unité de récupération de la chaleur des eaux usées (3) comprend un agencement de pompe à chaleur (7) destiné à transférer la chaleur en provenance des eaux usées dans la canalisation d'eaux usées (4), vers l'eau de traitement dans la canalisation d'eau de traitement (5) ;

   **caractérisé en ce que** l'agencement de pompe à chaleur (7) comprend un stockage tampon de la chaleur à basse température (8'), un stockage tampon de la chaleur à haute température (9'), et une pompe à chaleur (7'), dans lequel

   - le stockage tampon de la chaleur à basse température (8') présente une température de travail inférieure à celle du stockage tampon de la chaleur à haute température (9'), et est configuré afin d'extraire la chaleur à partir des eaux usées dans la canalisation d'eaux usées (4), et de stocker la chaleur extraite,
   - la pompe à chaleur (7') est configurée afin de transférer la chaleur stockée à partir du stockage tampon de la chaleur à basse température (8'), vers le stockage tampon de la chaleur à haute température (9'), et
   - le stockage tampon de la chaleur à haute température (9') est configuré afin de stocker la chaleur transférée par la pompe à chaleur (7'), et de fournir ladite chaleur à l'eau de traitement dans la canalisation d'eau de traitement (5),

dans lequel

- l'agencement d'échangeur de chaleur (6) de la première unité de récupération de la chaleur des eaux usées (2), comprend un stockage tampon de la chaleur configuré afin de tamponner la chaleur qui est transférée à partir des eaux usées vers l'eau de traitement dans la première unité de récupération de la chaleur des eaux usées (2), et la température de travail du stockage tampon de la chaleur de la première unité de récupération de la chaleur des eaux usées (2), est supérieure à la température de travail du stockage tampon de la chaleur à basse température (8') de la seconde unité de récupération de la chaleur des eaux usées (3),
- le dispositif de récupération de la chaleur des eaux usées (1) comprend au moins une première unité supplémentaire de récupération de la chaleur des eaux usées (2) avec un stockage tampon de la chaleur respectif, dans lequel les premières unités supplémentaires de récupération de la chaleur des eaux usées (2) sont agencées à la suite entre la première unité de récupération de la chaleur des eaux usées (2), et la seconde unité de récupération de la chaleur des eaux usées (3), de telle sorte que
- chaque unité suivante de récupération de la chaleur des eaux usées (2, 3), soit configurée afin d'être connectés à la canalisation d'eaux usées (4) en aval de l'unité précédente de récupération de la chaleur des eaux usées (2, 3), et à la canalisation d'eau de traitement (5) en aval de l'unité précédente de récupération de la chaleur des eaux usées (2, 3), dans lequel
- le stockage tampon de la chaleur de chaque première unité suivante de récupération de la chaleur des eaux usées (2), présente une température de travail inférieure à celle du stockage tampon de la chaleur de la première unité précédente de récupération de la chaleur des eaux usées (2), dans lequel
- les stockages tampons de la chaleur sont des dispositifs destinés à stocker la chaleur avec une capacité définie.

2. Dispositif de récupération de la chaleur des eaux usées (1) selon la revendication précédente 1, **caractérisé par** deux, trois ou quatre, premières unités supplémentaires de récupération de la chaleur des eaux usées (2) avec des stockages tampons de la chaleur respectifs.

3. Dispositif de récupération de la chaleur des eaux usées (1) selon l'une quelconque des revendications précédentes, **caractérisé par** des capteurs de température pour des niveaux d'énergie d'unité de stockage de la chaleur à basse température et à haute température, et un système de commande destiné à déclencher la pompe à chaleur une fois que le stockage tampon de la chaleur à basse température a contenu assez de chaleur pour déclencher la pompe.

4. Dispositif de récupération de la chaleur des eaux usées (1) selon l'une quelconque des revendications précédentes, **caractérisé en ce que** un, plusieurs, voire tous les stockages tampons de la chaleur, comprennent un matériau à changement de phase, la température de changement de phase respective correspondant à la température de travail respective.

5. Dispositif de récupération de la chaleur des eaux usées (1) selon l'une quelconque des revendications précédentes, **caractérisé en ce que** la pompe à chaleur (7') comprend au moins un compresseur (10), un condenseur, un évaporateur (11), et un autre échangeur de chaleur (8).

6. Dispositif de récupération de la chaleur des eaux usées (1) selon l'une quelconque des revendications précédentes, **caractérisé en ce que** la canalisation d'eau de traitement (5) est configurée afin d'être connectée à une canalisation d'eau froide principale (18), afin de fournir l'eau de traitement à la première unité de récupération de la chaleur des eaux usées (2).

7. Dispositif de récupération de la chaleur des eaux usées (1) selon l'une quelconque des revendications précédentes, **caractérisé en ce que** la canalisation d'eau de traitement (5) est configurée afin d'être connectée à un appareil d'eau de traitement (15) au moyen d'une première connexion (19) située en aval de la seconde unité de récupération de la chaleur des eaux usées (3), et au moyen d'une seconde connexion (20) située en aval de la ou des premières unités de récupération de la chaleur des eaux usées (2), et en amont de la seconde unité de récupération de la chaleur des eaux usées (3).

8. Dispositif de récupération de la chaleur des eaux usées (1) selon l'une quelconque des revendications précédentes,

   **caractérisé par** des moyens de nettoyage (12) configurés afin de nettoyer la première unité de récupération de la chaleur des eaux usées (2)

et / ou la seconde unité de récupération de la chaleur des eaux usées (3), en particulier en vidangeant l'échangeur de chaleur (6') de la première unité de récupération de la chaleur des eaux usées (2), et / ou l'échangeur de chaleur (8) de la seconde unité de récupération de la chaleur des eaux usées (3).

9. Dispositif de récupération de la chaleur des eaux usées (1) selon la revendication 8, **caractérisé par** des moyens de déclenchement, en particulier des moyens de déclenchement qui comprennent un capteur de dépassement de capacité (13) destiné à indiquer un dépassement de capacité dans la canalisation d'eaux usées (4), configurés afin d'activer automatiquement les moyens de nettoyage (12) si un critère préréglé est rempli, où, en particulier, le critère comprend un signal de dépassement de capacité du capteur de dépassement de capacité (13), et / ou le dépassement d'une période de temps préréglée.

10. Procédé destiné à récupérer la chaleur des eaux usées, comprenant les étapes suivantes du procédé

     a) chauffer l'eau de traitement dans une canalisation d'eau de traitement (5), en transférant la chaleur à partir des eaux usées dans une canalisation d'eaux usées (4), vers l'eau de traitement, au moyen d'un agencement d'échangeur de chaleur (6) dans une première unité de récupération de la chaleur des eaux usées (2), la première unité de récupération de la chaleur des eaux usées (2) étant connectée à la canalisation d'eaux usées (4) et à la canalisation d'eau de traitement (5),

     b) chauffer en outre l'eau de traitement dans la canalisation d'eau de traitement (5), en transférant la chaleur à partir des eaux usées vers l'eau de traitement, au moyen d'un agencement de pompe à chaleur (7) dans une seconde unité de récupération de la chaleur des eaux usées (3), la seconde unité de récupération de la chaleur des eaux usées (3) étant connectée à la canalisation d'eaux usées (4) en aval de la première unité de récupération de la chaleur des eaux usées (2), et à la canalisation d'eau propre en aval de la première unité de récupération de la chaleur des eaux usées (2), dans lequel, dans la seconde unité de récupération de la chaleur des eaux usées (3),

         - la chaleur des eaux usées dans la canalisation d'eaux usées (4) est extraite par un stockage tampon de la chaleur à basse température (8') de l'agencement de pompe à chaleur (7), et stockée dans ledit stockage tampon de la chaleur à basse température (8'),
         - la chaleur stockée dans le stockage tampon de la chaleur à basse température (8'), est transférée vers un stockage tampon de la chaleur à haute température (9') de l'agencement de pompe à chaleur (7) par une pompe à chaleur de l'agencement de pompe à chaleur (7), et
         - la chaleur transférée par la pompe à chaleur est stockée dans le stockage tampon de la chaleur à haute température (9'), et fournie à l'eau de traitement dans la canalisation d'eau de traitement (5) par ledit stockage tampon de la chaleur à haute température (9'),

     dans lequel

         - la chaleur qui est transféré à partir des eaux usées vers l'eau de traitement dans la première unité de récupération de la chaleur des eaux usées (2), est tamponnée par un stockage tampon de la chaleur de l'agencement d'échangeur de chaleur (6) de la première unité de récupération de la chaleur des eaux usées (2), la température de travail du stockage tampon de la chaleur de la première unité de récupération de la chaleur des eaux usées (2), étant supérieure à la température de travail du stockage tampon de la chaleur à basse température (8') de la seconde unité de récupération de la chaleur des eaux usées (3),

     dans lequel

         - le dispositif de récupération de la chaleur des eaux usées (1) comprend au moins une première unité supplémentaire de récupération de la chaleur des eaux usées (2) avec des stockage tampons de la chaleur respectifs, dans lequel les premières unités supplémentaires de récupération de la chaleur des eaux usées (2) sont agencées à la suite entre la première unité de récupération de la chaleur des eaux usées (2), et la seconde unité de récupération de la chaleur des eaux usées (3), de telle sorte que
         - chaque unité suivante de récupération de la chaleur des eaux usées (2, 3), soit configurée afin d'être connectée à la canalisation d'eaux usées (4) en aval de l'unité précédente de récupération de la chaleur des eaux usées (2, 3), et à la canalisation d'eau de traitement (5) en aval de l'unité précédente de récupération de la chaleur des eaux usées (2, 3),

dans lequel

- le stockage tampon de la chaleur de chaque première unité suivante de récupération de la chaleur des eaux usées (2), présente une température de travail inférieur à celle du stockage tampon de la chaleur de la première unité précédente de récupération de la chaleur des eaux usées (2), dans lequel les stockages tampons de la chaleur sont des dispositifs destinés à stocker la chaleur avec une capacité définie.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2575325 A
- WO 2017050623 A1
- WO 2012061891 A1
- DE 1020103044122 A1
- EP 2345851 A2
- GB 2304877 A